# EUROPÄISCHE PATENTSCHRIFT

(11) **EP 4 602 430 B1**
(45) Veröffentlichungstag und Bekanntmachung des Hinweises auf die Patenterteilung: **01.04.2026**
(21) Anmeldenummer: 23789993.5
(22) Anmeldetag: 13.10.2023
(51) Int. Cl.: G02C 7/02, G02C 7/06

(54) **BRILLENGLAS ZUM MYOPIE MANAGEMENT MITTELS PERIPHEREM WIRKUNGSANSTIEG**
SPECTACLES LENS FOR MANAGING MYOPIA BY MEANS OF INCREASED PERIPHERAL ACTION
LENTILLE DE LUNETTES POUR LA GESTION DE LA MYOPIE AU MOYEN D'UNE ACTION PÉRIPHÉRIQUE ACCRUE

(30) Priorität: 14.10.2022 DE 102022210894
(43) Veröffentlichungstag der Anmeldung: 20.08.2025
(73) Patentinhaber: Rodenstock GmbH, 80687 München (DE)
(72) Erfinder: ROSENSTEINER, Matthias, 85737 Ismaning (DE); SEIDEMANN, Anne, 81375 München (DE); BÉNARD, Yohann, 81541 München (DE); WELK, Andrea, 81547 München (DE); ALTHEIMER, Helmut, 87650 Baisweil-Lauchdorf (DE); ZIMMERMANN, Martin, 85253 Erdweg-Kleinberghofen (DE); BABL, Daniela, 80687 München (DE)
(74) Vertreter: Müller-Boré & Partner Patentanwälte PartG mbB
(86) Internationale Anmeldenummer: PCT/EP2023/078481
(87) Internationale Veröffentlichungsnummer: WO 2024/079315

(56) Entgegenhaltungen:
- US-A1- 2009 310 082
- US-A1- 2012 019 775
- US-A1- 2012 176 583

## Beschreibung

Die Erfindung betrifft ein Brillenglas mit zumindest einem speziell geformten peripheren Bereich mit abweichenden optischen Eigenschaften zur Verbesserung des langfristigen Tragekomforts mit gleichzeitig verbesserter Wahrnehmung.

Gerade bei Brillengläsern zur Korrektur von Myopie führt die oft merkliche Tendenz einer Progression der Myopie dazu, dass der Tragekomfort einmal angepasster Brillengläser und damit auch die Zufriedenheit des Brillenträgers und die Verträglichkeit der Brille nach kurzer Zeit wieder sinken.

Ganz generell nimmt Myopie weltweit, insbesondere im asiatischen Raum, dramatisch zu. Die WHO schätzt, dass 2050 über 50% aller Menschen myop sind. Mit Zunahme der Myopie des einzelnen Individuums nimmt auch das Risiko für damit verbundene Augenkrankheiten wie z.B. Netzhautablösung, Glaukom, Katarakt und Makula-Degeneration sehr stark zu. Deshalb besteht ein großes Interesse, die Zunahme der Myopie zu verlangsamen. Hierzu gibt es einige Ansätze, um mit optischen Hilfsmitteln (Sehhilfen) die Myopieprogression zu verlangsamen. Allen diesen Ansätzen ist aber gemein, dass sie sehr aufwendig und teuer und außerdem recht unflexibel sind, um sie an die sich schnell ändernden Gegebenheiten (z.B. Änderung der Verordnung einer Brille, Anforderungen an das visuelle System) anzupassen.

Bisher wurden verschiedene optische Wirkungen bezüglich Verträglichkeit und Komfort ophthalmischer Linsen, insbesondere Brillengläser hinsichtlich ihres Einflusses auf Myopie und/oder Hyperopie sowie deren Progression bzw. Entwicklung in Abhängigkeit der optischen und physiologischen Mechanismen, die eine Progression bzw. ein Voranschreiten, insbesondere eine Verschlechterung, erklären oder verlangsamen sollen, untersucht. Die bestehenden Ansätze basieren im Wesentlichen darauf, das Bild vor die Netzhaut abzubilden, da dadurch das Längenwachstum des Auges gebremst werden soll. Hierbei hat sich gezeigt, dass es ausreichend ist, wenn dies nur in der Peripherie der Netzhaut geschieht.

Ein möglicher Ansatz ist die Verwendung von Bifokalbrillengläsern und/oder Progressivbrillengläsern (PAL). Dabei wird zum einen durch die Addition ein Bereich beim Blick in die Ferne im peripheren Bereich vor die Netzhaut abgebildet und zum anderen wird beim Blick in die Nähe zumindest bei zu geringer Akkommodation das Bild nicht hinter der Netzhaut abgebildet. Dies funktioniert bei Kindern mit Akkommodationsinsuffizienz und/oder Konvergenzexzess besser. Bei solchen Ansätzen werden akzeptable Ergebnisse allerdings nur bei einer kleineren Gruppe mit Konvergenzexzess erzielt. Bifokalbrillengläser sind, insbesondere für Kinder, zumindest aus kosmetischen Gründen aber nicht wünschenswert.

Ein weiterer Ansatz basiert auf speziellen PAL (oder radialsymmetrischen PAL) mit einer zentralen scharf abbildenden Wirkung und einer peripheren Addition (z.B. DE 10 2009 053 467 A1).

PAL, wie in diesen beiden Ansätzen, weisen Bereiche mit großen Aberrationen auf. Weiterhin ist die Qualität des peripheren Sehens und auch des fovealen Sehens, wenn durch die Peripherie der Brillengläser geschaut wird, durch die Aberrationen stark herabgesetzt. Sind hohe Anforderung an das visuelle System gestellt (z.B. im Straßenverkehr) kann dies nur mit einer zweiten Einstärkenbrille gelöst werden. Dies erhöht den Aufwand und die Kosten bei Änderung der Verordnung nochmals. Die Akzeptanz solcher Lösungen ist daher oft gering.

Weitere Ansätze basieren beispielsweise auf speziellen Kontaktlinsen. Beispielsweise wurden progressive Kontaktlinsen mit einer in der Peripherie höheren Pluswirkung als im zentralen Bereich untersucht. Damit ist allerdings in der Praxis auch das foveale Sehen beeinträchtigt. Außerdem muss auch hier bei Stärkenänderung aufwendig eine neue Linse angefertigt werden. Weiterhin ist das Handling und die Zuverlässigkeit in der Handhabung bei Kindern beschränkt. Dies trifft insbesondere bei kleinen Kindern zu, wobei erschwerend hinzukommt, dass man eigentlich den größten Effekt erreicht, wenn man gerade im frühen Kindesalter bereits mit den Maßnahmen zur Verlangsamung der Myopie beginnt.

Ein anderer Ansatz mit Kontaktlinsen nutzt sogenannte Ortho-K Kontaktlinsen, welche über Nacht getragen werden und dabei die Hornhaut deformieren. Damit soll zentral die Myopie korrigiert werden und in der Peripherie auch eine Pluswirkung (gegenüber zentral) erzeugt werden. Hier ist aber ebenfalls jede Kontaktlinse eine Spezialanfertigung und es muss auch hier aufwendig eine neue Linse z.B. im Falle einer neuen Verordnung hergestellt werden. Weiterhin sind, insbesondere bei kleinen Kindern, die Auswirkungen der Deformierungen der Cornea auf den Metabolismus und die Struktur der Cornea ungeklärt.

Das sich aus einem Voranschreiten von Myopie ergebende Problem für einen Brillenträger ist der stetig sinkende Tragekomfort für eine einmal angepasste Brille. Spezielle Brillengläser zur Myopiekontrolle versuchen, die Fokusebene des Gesichtsfeldes in der Peripherie vor die Netzhaut zu ziehen und so das Längenwachstum des Auges zu bremsen.

So wurden bisher bereits unterschiedliche Brillengläser vorgeschlagen, die beispielsweise ähnlich einem Gleitsichtglas in der Peripherie durch eine Addition in der Wirkung die Fokusebene im seitlichen Gesichtsfeld vor die Netzhaut bringen (z.B. US7025460). Insbesondere gibt es den Ansatz eine zentrale Zone guter Sicht zu haben, die vor der peripheren Zone mit einer Addition umgeben wird (z.B. WO2007041706A1) sowie die Möglichkeit, nur in Teilen der Peripherie die zusätzliche Wirkung einzubringen (z.B. DE102009053467B4). Die Herausforderung bei diesen Gläsern ist es, die Balance zwischen der Wirksamkeit der Gläser (z.B. mit möglichst großen Bereichen mit peripherer Wirkung vor der Netzhaut) und ihrer Verträglichkeit (dem optischen Komfort insbesondere definiert durch die Zone mit gutem bzw. annehmbarem Durchblick sowie durch die Verzeichnungen und Schaukeleffekte) zu finden.

Ferner beschreibt die Die Druckschrift US 2012/019775 A1 eine Trainingsmethode für Akkommodations- und Vergenzsysteme und multifokale ophthalmische Linsen mit horizontaler periodischer oder quasi-periodischer stufenlos wechselnder optischer Leistung (HOPSA-Linsen). Es werden mehrere Ausführungsformen von HOPSA-Linsen beschrieben, wie z. B. multi- und monozyklische, mehrschichtige Linsen, die die Grundkorrektur- und Trainingsfunktionen zwischen den Linsenseiten oder -schichten aufteilen und deren linke und rechte Linsenoberfläche individuell konfiguriert sind.

Die Druckschrift US 2009/310082 A1 beschreibt ein ophthalmisches Linsenelement. Das ophthalmische Linsenelement umfasst einen zentralen Bereich mit geringem Oberflächenastigmatismus und einen peripheren Bereich. Der zentrale Bereich umfasst eine obere Sichtzone, die eine erste Brechkraft aufweist, die für die Fernsichtaufgaben des Trägers geeignet ist. Der periphere Bereich hat eine positive Brechkraft im Verhältnis zur ersten Brechkraft und umgibt den zentralen Bereich. Der periphere Bereich sorgt für eine optische Korrektur und umfasst einen oder mehrere Bereiche mit relativ hohem Oberflächenastigmatismus, einen unteren oder nahen Sichtbereich mit geringem Oberflächenastigmatismus und einen Korridor mit geringem Oberflächenastigmatismus, dessen Brechkraft von der des oberen Sichtbereichs zu der des unteren Sichtbereichs variiert.

Die Druckschrift US 2012/176583 A1 beschreibt ferner eine ophthalmische Linse, umfassend einen Verordnungs-Kontrollpunkt, einen oberen Bereich, der, bezogen auf den Verordnungs-Kontrollpunkt, eine kontinuierliche Veränderung einer mittleren Brechkraft aufweist, und einen unteren Bereich, der in Bezug auf den Verordnungs-Kontrollpunkt eine kontinuierliche Änderung einer mittleren Brechkraft aufweist.

Aufgabe der vorliegenden Erfindung ist somit, eine anhaltende Verträglichkeit einer Brille zu verbessern und damit einen langfristigen und hohen Tragekomfort mit gleichzeitig verbesserter Wahrnehmung zu erreichen. Diese Aufgabe wird erfindungsgemäß durch ein Brillenglas mit den in dem unabhängigen Anspruch angegebenen Merkmalen gelöst. Bevorzugte Ausführungsformen sind Gegenstand der abhängigen Ansprüche.

Die Erfindung betrifft somit ein Brillenglas, welches einen durchgängigen Kanalbereich und einen Wirkungsbereich derart umfasst, dass sich der (durchgängige) Kanalbereich von einem oberen Rand des Brillenglases zu einem unteren Rand des Brillenglases durchgängig erstreckt, und dass der Wirkungsbereich horizontal beidseitig an den Kanalbereich angrenzt und sich beidseitig jeweils vom oberen zum unteren Rand des Brillenglases durchgängig erstreckt. Dabei steigt die Brechkraft des Brillenglases vom Kanalbereich zum Wirkungsbereich hin beidseits des Kanalbereichs an.

Hierbei dient der Kanalbereich insbesondere als Rezeptbereich, also als Bereich klarer Sicht, da dort die individuellen Verordnungsdaten zur Korrektion einer Fehlsichtigkeit (insbesondere zumindest Brechkraft und Astigmatismus) verordnungsnah umgesetzt werden.

Im Vergleich zu Brillengläsern, deren zentrale Zone vollständig von einer Pluswirkung umringt wird, haben erfindungsgemäße Brillengläser den Vorteil eines vergrößerten Sehfeldes mit scharfer Wahrnehmung, während zu einem überraschendem Maß auch die Verträglichkeit aufgrund einer damit erreichten deutlichen Reduktion von Verzeichnungen in allen Richtungen verbessert wird. Im Vergleich zu herkömmlichen Brillengläsern mit nur teilweise vorhandenem Plusbereich ist in erfindungsgemäßen Brillengläsern die Wirkung der Unterdrückung einer Myopieprogression deutlich höher.

Erreicht werden diese Vorteile der erfindungsgemäßen Brillengläser mit anderen Worten dadurch, dass die Zusatzwirkung insbesondere den größten Teil der Peripherie des Brillenglases ausfüllt, jedoch zwei spezielle periphere Bereiche freilässt, die insbesondere näherungsweise diametral gegenüber liegen: Einen Bereich, der sich vom Zentrum nach unten, insbesondere leicht nasal versetzt erstreckt, um Nahsicht mit dem Brillenglas zu unterstützen, bei der die Augen eine Konvergenzstellung einnehmen, sowie einen Bereich der sich vom Zentrum nach oben erstreckt, um eine Stabilisierung des Bildfeldes zu erreichen und so die Verträglichkeit und Wirksamkeit gleichzeitig zu gewährleisten. Durch die optimale Verteilung der Bereiche mit und ohne Zusatzwirkung (im Vergleich zur Rezeptwirkung) in der Peripherie des Brillenglases wird die maximale Verträglichkeit bei guter präventiver Wirkung erreicht.

Die Richtungen "unten" und "oben" (und davon abgeleitete Bezeichnungen wie z.B. "unterhalb" und "oberhalb") sowie Bezeichnungen für Richtungen "nasal", "temporal", "horizontal" und "vertikal" werden in dieser Beschreibung immer in Bezug auf die Gebrauchsstellung des Brillenglases gesehen, welche insbesondere durch die Zentrierdaten für das Brillenglas festgelegt ist. Dabei wird vorzugsweise als "unterer" und "oberer" Rand des Brillenglases ein Randabschnitt einer unteren bzw. oberen Hälfte, weiter bevorzugt eines unteren bzw. oberen Drittels, noch weiter bevorzugt eines unteren bzw. oberen Viertels, einer Brillenglasfläche (Vorderfläche und/oder Rückfläche) des Brillenglases verstanden. Besonders bevorzugt bezeichnet ein oberer bzw. unterer Rand: insbesondere einen Abschnitt des Randes des gesamten Brillenglases, der die obersten bzw. untersten 20%, vorzugsweise 15%, noch mehr bevorzugt 10%, am meisten bevorzugt 5%, der vertikalen Höhe des Brillenglases begrenzt. Das in dieser Beschreibung bezeichnete Brillenglas ist ein bereits gerandetes bzw. eingeschliffenes (fertiges) Brillenglas.

Eine horizontale Breite des Kanalbereichs am oberen Rand und am unteren Rand des Brillenglases (bzw. insbesondere der jeweilige Abstand der Punkte, in denen seitliche Grenzlinien zwischen dem Kanalbereich und dem Wirkungsbereich auf den Rand des Brillenglases treffen) ist kleiner als eine maximale horizontale Breite des Kanalbereichs. Zumindest ist es aber bevorzugt, wenn der Kanalbereich in einem vertikal mittleren Bereich (z.B. einem der Höhe nach mittleren Drittel) des Brillenglases eine maximale horizontale Breite aufweist, die größer ist als eine minimale, vorzugsweise maximale, horizontale Breite des Kanalbereichs oberhalb, insbesondere in einem der Höhe nach oberen Drittel des Brillenglases und/oder eine minimale, vorzugsweise maximale, horizontale Breite des Kanalbereichs unterhalb, insbesondere in einem der Höhe nach unteren Drittel des Brillenglases. Dies führt gerade zu einer besonders hohen Wirksamkeit des Wirkungsbereichs, welcher durch den durchgängigen und insbesondere oben und unten besonders schmalen Kanal in einen nasalen Wirkungsabschnitt und einen temporalen Wirkungsabschnitt getrennt wird. Dabei erstreckt sich insbesondere sowohl der nasale als auch der temporale Wirkungsabschnitt für sich betrachtet zusammenhängend vom oberen zum unteren Rand des Brillenglases, wobei sowohl der nasale als auch der temporale Wirkungsabschnitt, insbesondere entlang der gesamten Längen zwischen dem oberen und dem unteren Rand des Brillenglases, direkt an den Kanalbereich angrenzt. Die vom Kanalbereich zum Wirkungsbereich ansteigende Brechkraft verläuft vorzugsweise auch beim Übergang vom Kanalbereich zum Wirkungsbereich insbesondere beidseitig stetig. Dadurch wird auch bei Kopfbewegungen ein ruhiger Seheindruck erreicht.

Besonders bevorzugt weichen die maximale Brechkraft im nasalen und im temporalen Wirkungsabschnitt um nicht mehr als etwa 3 dpt, vorzugsweise nicht mehr als etwa 2 dpt, noch mehr bevorzugt nicht mehr als etwa 1 dpt, am meisten bevorzugt nicht mehr als etwa 0,5 dpt, voneinander ab. Alternativ oder gleichzeitig ist die maximale Brechkraft sowohl im nasalen als auch im temporalen Wirkungsbereich je nach Ausführungsform und Anwendungsbereich um zumindest etwa 1 dpt, vorzugsweise zumindest etwa 1,5 dpt, weiter bevorzugt zumindest etwa 2 dpt, noch mehr bevorzugt zumindest etwa 2,5 dpt, am meisten bevorzugt zumindest etwa 3 dpt, größer als die minimale Brechkraft im Kanalbereich. Die Gesamtspanne der Variation der Brechkraft zwischen einer minimalen Brechkraft im Kanalbereich zu einer maximalen Brechkraft im Wirkungsbereich hängt vorzugsweise auch von einer möglichen Spanne der Variation der Brechkraft innerhalb des Kanalbereichs ab. So kann bei einem nominellen "Einstärkenglas", bei dem die Brechkraft über den gesamten Kanalbereich hinweg nur wenig variiert und mit einem Brechkraftwert das durch die Verordnung beschriebene Refraktionsdefizit des entsprechenden Auges kompensiert, eine ausreichende Wirkung im Wirkungsbereich eventuell schon bei einer gesamten Spanne einer Brechkraftvariation zwischen dem Kanalbereich und dem Wirkungsbereich von bis 2 dpt erreicht werden. Für den Fall aber, dass bereits der Kanalbereich beispielsweise einen progressiven Wirkungsanstieg nach unten hin in Form eines nominellen "Gleitsichtglases" vorsieht, könnte die gesamte Spanne einer Brechkraftvariation zwischen der minimalen Brechkraft im Kanalbereich und der maximalen Brechkraft im Wirkungsbereich vorzugsweise auch größer ausfallen. Insbesondere ist es bevorzugt, wenn über die gesamte Länge des Kanalbereichs zwischen oberem und unterem Rand des Brillenglases der horizontale Anstieg der Brechkraft hin zum Wirkungsbereich oder innerhalb des Wirkungsbereichs groß genug ist, um eine ausreichende Unterdrückung der Myopieprogression zu stimulieren. Daher ist dann insbesondere die gesamte Spanne einer Brechkraftvariation zwischen der minimalen Brechkraft im Kanalbereich und der maximalen Brechkraft im Wirkungsbereich zumindest größer als die Addition innerhalb des Kanalbereichs.

Der Kanalbereich wird innerhalb des Brillenglases beidseitig jeweils durch eine Kanalgrenzlinie zum Wirkungsbereich hin begrenzt, welche für jeden horizontalen Schnitt durch das Brillenglas dadurch festgelegt wird, dass die Brechkraft des Brillenglases ausgehend von einer Position einer minimalen Brechkraft innerhalb des Kanalbereichs entlang des jeweiligen Schnitts zu den lateralen Seiten hin dort erstmals um einen (insbesondere für den Kanalbereich charakteristischen) Kanaltoleranzwert höher liegt als die jeweilige minimale Brechkraft (innerhalb des Kanalbereichs entlang des jeweiligen Schnitts). Der (kanalspezifische) Kanaltoleranzwert liegt im Bereich von etwa 0,25 dpt bis etwa 0,5 dpt, insbesondere bei 0,25 dpt, oder insbesondere bei etwa 0,3 dpt oder insbesondere bei etwa 0,35 dpt, oder insbesondere bei etwa 0,4 dpt oder insbesondere bei etwa 0,45 dpt oder insbesondere bei etwa 0,5 dpt.

Diese Art der Definition von Kanalgrenzen über den Verlauf der Kanalgrenzlinien anhand horizontaler Schnitte durch das Brillenglas ist für viele bevorzugte Ausführungsformen der Erfindung deshalb besonders vorteilhaft, weil sie den Verlauf und die Ausdehnung des Kanalbereichs im Wesentlichen unabhängig vom Verlauf der absoluten Werte der Brechkraft entlang des Kanalbereichs (z.B. bei Vorhandensein einer Addition im Falle eines Gleitsichtglases, wie dies weiter unten noch beschrieben wird) erlaubt.

In einer bevorzugten Ausführungsform ist für zumindest 50%, vorzugsweise zumindest 60%, noch mehr bevorzugt zumindest 70%, am meisten bevorzugt zumindest 80%, der Höhe des Brillenglases, in jedem horizontalen Schnitt eine maximale Brechkraft im nasalen und/oder im temporalen Wirkungsabschnitt um zumindest einen Minimalwirkungswert größer als die minimale Brechkraft innerhalb des Kanalbereichs entlang des jeweiligen Schnitts, wobei der Minimalwirkungswert um etwa 0,25 dpt, vorzugsweise um etwa 0,5 dpt, noch mehr bevorzugt um etwa 1 dpt, am meisten bevorzugt um etwa 1,5 dpt größer ist als der minimale Brechwert innerhalb des Kanalbereichs oder um etwa 0,25 dpt, vorzugsweise um etwa 0,5 dpt, noch mehr bevorzugt um etwa 1 dpt, am meisten bevorzugt um etwa 1,5 dpt, größer ist als der Kanaltoleranzwert.

In einer bevorzugten Ausführungsform weist für zumindest 50%, vorzugsweise zumindest 60%, noch mehr bevorzugt zumindest 70%, am meisten bevorzugt zumindest 80% oder gar zumindest 90% der Höhe des Brillenglases, in jedem horizontalen Schnitt der nasale und/oder der temporale Wirkungsabschnitt einen unmittelbar an den Kanalbereich angrenzenden Wirkungsanstiegsbereich mit einer horizontalen Breite von zumindest 5 mm, vorzugsweise zumindest 10 mm, noch weitere bevorzugt zumindest 20 mm auf, innerhalb dessen die Brechkraft ausgehend vom Kanalbereich zur jeweiligen Peripherie hin (vorzugsweise streng) monoton ansteigt.

In einer bevorzugten Ausführungsform kann mit anderen Worten für jede horizontale Schnittebene durch das Brillenglas, welche sowohl den Kanalbereich als auch (insbesondere beidseitig) den Wirkungsbereich schneidet, jeweils eine entsprechende Grenzlinie zwischen dem Kanalbereich und dem angrenzenden Wirkungsbereich dort definiert werden, wo die Brechkraft des Brillenglases ausgehend von der minimalen Brechkraft innerhalb des Kanalbereichs in der jeweiligen Schnittebene (nasal und/oder temporal) hin zum Wirkungsbereich zum ersten Mal um einen vorgebebenen Wert (Kanaltoleranzwert) von insbesondere 0,25 dpt bzw. 0,5 dpt höher liegt (also höher als besagte minimale Brechkraft innerhalb des Kanalbereichs in der jeweiligen Schnittebene). Mit anderen Worten wird damit der Kanalbereich insbesondere derart definiert, dass dessen Brechkraftvariation innerhalb jedes horizontalen Schnitts nicht größer als der Kanaltoleranzwert von insbesondere etwa 0,25 dpt bzw. etwa 0,5 dpt ist.

Der Kanalbereich ist somit insbesondere vollständig eingegrenzt durch einerseits die beiderseitigen Kanalgrenzlinien und andererseits den Rand des Brillenglases (insbesondere den oberen und unteren Rand). Besonders bevorzugt steigt für zumindest 50%, vorzugsweise zumindest 60%, noch mehr bevorzugt zumindest 70%, am meisten bevorzugt zumindest 80%, der Höhe des Brillenglases für jeden horizontalen Schnitt durch das Brillenglases die Brechkraft im Wirkungsbereich von der jeweiligen Kanalgrenzlinie weg bis zu einer jeweiligen maximalen Brechkraft um zumindest etwa 0,25 dpt, vorzugsweise um zumindest etwa 0,5 dpt, noch mehr bevorzugt um zumindest etwa 1 dpt, am meisten bevorzugt um zumindest etwa 1,5 dpt, an.

In einer bevorzugten Ausführungsform umfasst der Kanalbereich:
- einen zentralen Hauptdurchblicksbereich;
- eine unterhalb des zentralen Hauptdurchblicksbereichs angeordnete und sich vom zentralen Hauptdurchblicksbereich zum unteren Rand des Brillenglases erstreckende Nahsichtzone; und
- einen oberhalb des zentralen Hauptdurchblicksbereichs angeordneten und sich vom zentralen Hauptdurchblicksbereich zum oberen Rand des Brillenglases erstreckenden oberen Kanalabschnitt.

In einer bevorzugten Ausführungsform weist das Brillenglas im gesamten Kanalbereich eine im Wesentlichen konstante Brechkraft auf, wobei eine durchgängige Linie innerhalb des Kanalbereichs vom oberen zum unteren Rand des Brillenglases existiert, entlang der die Brechkraft des Brillenglases um insbesondere nicht mehr als etwa 0,5 dpt, vorzugsweise nicht mehr als 0,25 dpt, variiert. Ein derartiges Brillenglas wirkt demnach als nominelles "Einstärkenglas".

Besonders bevorzugt weist das Brillenglas zumindest im zentralen Hauptdurchblicksbereich und im oberen Kanalabschnitt eine (entsprechend) im Wesentlichen konstante Brechkraft auf. Für den Fall eines nominellen Mehrstärken- oder "Gleitsichtglases" ist es bevorzugt, wenn das Brillenglas in der Nahsichtzone eine höhere mittlere Brechkraft aufweist als im zentralen Hauptdurchblicksbereich.

Um der Konvergenz der Blickrichtungen bei der Nahsicht besonders gerecht zu werden, ist es bevorzugt, wenn sich die Nahsichtzone vom zentralen Hauptdurchblicksbereich zum unteren Rand des Brillenglases entlang einer Linie, insbesondere einer Geraden, erstreckt, welche sich von einem Zentrum (insbesondere einem Flächenschwerpunkt) des zentralen Hauptdurchblicksbereichs nasal abwärts unter einem Winkel im Bereich von etwa 0° bis etwa 30°, vorzugsweise in einem Bereich von etwa 5° bis etwa 20°, noch mehr bevorzugt in einem Bereich von etwa 8° bis etwa 15° relativ zur Vertikalen erstreckt. Als Zentrum kann dabei insbesondere ein Mittelpunkt (z.B. geometrischer Schwerpunkt oder Mittelpunkt eines einbeschriebenen Kreises) des zentralen Hauptdurchblicksbereichs dienen.

Vorzugsweise liegt eine horizontale Breite des oberen Kanalabschnitts (zwischen dem zentralen Hauptdurchblicksbereich und dem oberen Rand des Brillenglases) in einem Bereich von zumindest etwa 3 mm, vorzugsweise zumindest etwa 5 mm, noch mehr bevorzugt zumindest etwa 10 mm, und/oder eine horizontale Breite des oberen Kanalabschnitts (zwischen dem zentralen Hauptdurchblicksbereich und dem oberen Rand des Brillenglases), oder zumindest eine minimale horizontale Breite des oberen Kanalabschnitts (also an dessen engster Stelle) liegt vorzugsweise in einem Bereich von nicht mehr als etwa 30 mm, weiter bevorzugt nicht mehr als etwa 20 mm, noch mehr bevorzugt nicht mehr als etwa 10 mm.

Vorzugsweise liegt eine horizontale Breite der Nahsichtzone (zwischen dem zentralen Hauptdurchblicksbereich und dem unteren Rand des Brillenglases) in einem Bereich von zumindest etwa 3 mm, vorzugsweise zumindest etwa 5 mm, noch mehr bevorzugt zumindest etwa 10 mm liegt, und/oder eine horizontale Breite der Nahsichtzone (zwischen dem zentralen Hauptdurchblicksbereich und dem unteren Rand des Brillenglases), oder zumindest eine minimale horizontale Breite der Nahsichtzone (also an deren engster Stelle) liegt vorzugsweise in einem Bereich von nicht mehr als etwa 30 mm, vorzugsweise nicht mehr als etwa 20 mm, noch mehr bevorzugt nicht mehr als etwa 10 mm.

In einer bevorzugten Ausführungsform liegt eine (maximale) horizontale Breite des zentralen Hauptdurchblicksbereichs in einem Bereich von zumindest etwa 5 mm, vorzugsweise zumindest etwa 10 mm, noch mehr bevorzugt zumindest etwa 15 mm, am meisten bevorzugt zumindest etwa 20 mm, und/oder eine (maximale) horizontale Breite des zentralen Hauptdurchblicksbereichs liegt in einem Bereich von nicht mehr als etwa 35 mm, vorzugsweise nicht mehr als etwa 30 mm, weiter bevorzugt nicht mehr als etwa 25 mm, am meisten bevorzugt nicht mehr als etwa 20 mm. Ein weiteres bevorzugtes Brillenglas lässt sich dadurch charakterisieren, dass der zentrale Hauptdurchblicksbereich eine Kreisfläche mit einem Radius von zumindest etwa 3 mm, vorzugsweise zumindest etwa 5 mm, noch mehr bevorzugt zumindest etwa 8 mm umfasst; und/oder wobei der zentrale Hauptdurchblicksbereich innerhalb einer Kreisfläche mit einem Radius von höchstens etwa 25 mm, vorzugsweise höchstens etwa 20 mm, noch mehr bevorzugt höchstens etwa 15 mm, am meisten bevorzugt höchstens etwa 10 mm liegt. In einer weiteren Charakterisierung einer bevorzugten Ausführungsform liegt der Wirkungsbereich außerhalb einer (zentralen) Kreisfläche mit einem Radius von zumindest etwa 10 mm, vorzugsweise zumindest etwa 15 mm, besonders bevorzugt zumindest etwa 20 mm, noch mehr bevorzugt zumindest etwa 25 mm, am meisten bevorzugt zumindest etwa 30 mm, wobei insbesondere in einem Brillenglas gemäß einer bevorzugten Ausführungsform diese Kreisfläche innerhalb des zentralen Hauptdurchblicksbereichs liegt.

Vorzugsweise ist die maximale horizontale Breite des zentralen Hauptdurchblicksbereichs größer als die maximale Breite des oberen Kanalabschnitts. Zudem oder alternativ ist die maximale horizontale Breite des zentralen Hauptdurchblicksbereichs vorzugsweise größer als die maximale Breite der Nahsichtzone. Dies kann ermöglichen, dass ein möglichst großes Sehfeld mit scharfer Wahrnehmung im Bereich des Hauptdurchblicksbereichs bereitgestellt werden kann, während gleichzeitig eine Reduktion des Wirkungsbereichs klein gehalten werden kann. Da der Wirkungsbereich in einem Bereich horizontal zum oberen Kanalabschnitt und/oder zur Nahsichtzone damit vergrößert ist, kann in solchen Brillengläsern die Wirksamkeit der Unterdrückung einer Myopieprogression deutlich höher sein, während die Verträglichkeit des Brillenglases für den oberen Kanalabschnitt und/oder die Nahsichtzone verbessert wird oder wenigstens erhalten bleibt.

Der Hauptdurchblicksbereich ist vorzugsweise in einem vertikal mittleren Bereich, insbesondere einem der Höhe nach mittleren Drittel, des Brillenglases ausgebildet. Insbesondere ist der obere Kanalabschnitt in den obersten 30%, bevorzugt 20%, weiter bevorzugt 15%, noch mehr bevorzugt 10%, am meisten bevorzugt 5%, der vertikalen Höhe des Brillenglases ausgebildet. Insbesondere ist die Nahsichtzone zudem oder alternativ in den untersten 30%, bevorzugt 20%, weiter bevorzugt 15%, noch mehr bevorzugt 10%, am meisten bevorzugt 5%, der vertikalen Höhe des Brillenglases ausgebildet.

Nachfolgend wird die Erfindung anhand bevorzugter Ausführungsformen mit Bezug auf die beigefügten Zeichnungen weiter beschrieben. Dabei zeigen:
- Fig. 1: schematische Darstellung einzelner Bereiche auf einem Brillenglas gemäß einer bevorzugten Ausführungsform;
- Fig. 2: schematische Darstellung einer beispielhaften Brechkraftverteilung in einem Brillenglas gemäß einer bevorzugten Ausführungsform;
- Fig. 3: zeigt eine konkrete Brechkraftverteilung in einem Brillenglas.

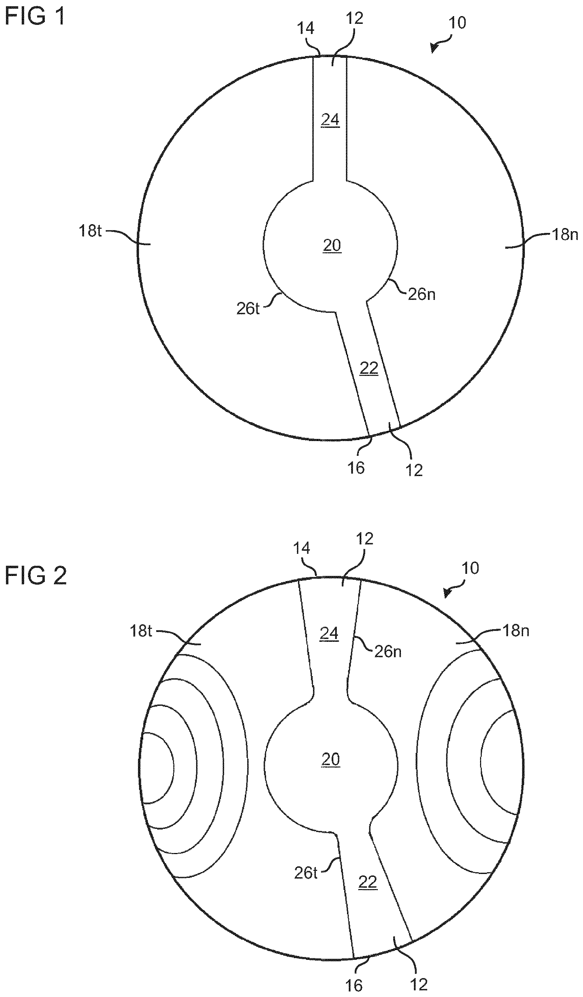

Fig. 1 zeigt eine schematische Verteilung einzelner Bereiche auf einem Brillenglas 10 gemäß einer bevorzugten Ausführungsform. Dabei erstreckt sich ein Kanalbereich 12 von einem oberen Rand 14 des Brillenglases 10 durchgängig bis zu einem unteren Rand 16 des Brillenglases 10. Dieser Kanalbereich 12 dient bei Anwendung der richtigen Verordnung für das entsprechende Auge als Klarsichtbereich bzw. Rezeptbereich des Brillenglases 10 derart, dass der Benutzer durch diesen Bereich hindurch deutlich sehen kann, da dieser Bereich eine Fehlsichtigkeit des Auges weitgehend kompensiert.

In der dargestellten Ausführungsform ist der Kanalbereich 12 schematisch in drei Abschnitte unterteilt, nämlich:
- einen zentralen Hauptdurchblicksbereich 20, welcher insbesondere für einen Geradeausblick des Benutzers (bzw. einen Blick in die Ferne zum Horizont) dienen kann,
- eine Nahsichtzone 22, welche sich ausgehend vom zentralen Hauptdurchblicksbereich 20 leicht nasal nach unten zum unteren Rand 16 des Brillenglases 10 erstreckt, und
- einen oberen Kanalabschnitt 24, welcher sich ausgehend vom zentralen Hauptdurchblicksbereich 20 zum oberen Rand 14 des Brillenglases 10 erstreckt.

Im Allgemeinen (also nicht nur in dieser hier dargestellten Ausführungsform) ist es bevorzugt, wenn sich der obere Kanalabschnitt im Wesentlichen entlang einer vertikalen Linie erstreckt, also (insbesondere anders als die Nahsichtzone) im Wesentlichen vertikal verläuft.

Dieser Kanalbereich 12 wird nasal und temporal von einem jeweiligen nasalen Wirkungsabschnitt 18n bzw. temporalen Wirkungsabschnitt 18t umgeben, die insbesondere entlang einer jeweiligen nasalen Kanalgrenzlinie 26n bzw. temporalen Kanalgrenzlinie 26t direkt an den Kanalbereich 12 angrenzen. Die beiden Wirkungsabschnitte 18n, 18t bilden zusammen einen Wirkungsbereich, in welchem das Brillenglas 10 im Wesentlichen eine im Vergleich zu den Verordnungsdaten, welche im Kanalbereich verwirklicht sind, höhere Brechkraft aufweist. Mit anderen Worten steigt die Brechkraft des Brillenglases 10 insbesondere auf der gesamten Länge des Kanalbereichs 12 vom Kanalbereich 12 auf beiden Seiten zum Wirkungsbereich (bzw. den jeweiligen Wirkungsabschnitten) hin an, insbesondere im Bereich der Kanalgrenzlinien 26n, 26t.

Innerhalb des Kanalbereichs hingegen ist die Brechkraft des Brillenglases zumindest teilweise im Wesentlichen konstant. Besonders bevorzugt ist die Brechkraft des Brillenglases 10 zumindest im Hauptdurchblicksbereich 20 und im oberen Kanalabschnitt 24 im Wesentlichen konstant. Zur Verwirklichung eines nominellen "Einstärkenglases" ist die Brechkraft des Brillenglases 10 vorzugsweise im gesamten Kanalbereich 12 im Wesentlichen konstant. Soll die Erfindung hingegen beispielsweise in Zusammenhang mit einer Gleitsichtwirkung genutzt werden, kann die Brechkraft des Brillenglases 10 zumindest in der Nahsichtzone 22 gemäß einer in einer (insbesondere individuellen) Verordnung festgelegten Addition höher sein als im zentralen Hauptdurchblicksbereich 20.

Wie aus der schematischen Darstellung der bevorzugten Ausführungsform von Fig. 1 zu erkennen ist, weist der zentrale Hauptdurchblicksbereich 20 eine maximale horizontale Breite (zwischen den Kanalgrenzlinien 26n, 26t) auf, welche insbesondere größer ist als eine minimale horizontale Breite der Nahsichtzone 22 und eine minimale horizontale Breite des oberen Kanalabschnitts 24. Gerade durch die Kombination einer im Wesentlichen konstanten Brechkraft im zentralen Hauptdurchblicksbereich 20 und dem oberen Kanalabschnitt 24 mit der (zumindest abschnittsweise bzw. teilweise) geringen Kanalbreite im oberen Kanalabschnitt 24 wird eine hohe Effektivität des gesamten Wirkungsbereichs in Bezug auf eine Unterdrückung einer Myopieprogression verbunden mit einer gleichzeitig überraschend guten Verträglichkeit der Brille erzielt. Anders als in Konzepten mit oben durchgängigen Wirkungsbereichen werden in dem hier beschriebenen Konzept vor allem Verzeichnungen und Schaukeleffekte geringgehalten. Diese Verbesserung wird dem Grund nach sowohl für Einstärkengläser (also, wenn der gesamte Kanalbereich 12 eine im Wesentlichen konstante Brechkraft aufweist) als auch für Gleitsichtgläser (also, wenn insbesondere die Nahsichtzone 22 eine Addition aufweist) erreicht.

Fig. 2 zeigt eine schematische Darstellung einer beispielhaften Brechkraftverteilung in einem Brillenglas gemäß einer bevorzugten Ausführungsform. Diese schematische Darstellung könnte dem Grunde nach insbesondere einem Brillenglas 10 aus Fig. 1 entsprechen, wobei in Fig. 2 durch die konkrete Verteilung der Brechkraft erkennbar wird, dass hier eine Ausführungsform als Einstärkenglas dargestellt ist. So erstreckt sich hier wiederum der Kanalbereich 12, welcher den oberen Kanalabschnitt 24, den zentralen Hauptdurchblicksbereich 20 und die Nahsichtzone 22 umfasst, in dieser Reihenfolge vom oberen Rand 14 des Brillenglases 10 zum unteren Rand 16 des Brillenglases. An diesen Kanalbereich 12 grenzen seitlich der nasale Wirkungsabschnitt 18n und der temporale Wirkungsabschnitt 18t an.

Die zusätzlich zum gesamten Randverlauf des Brillenglases in Fig. 2 dargestellten Linien repräsentieren Linien (Isolinien) gleicher Brechkraft des Brillenglases 10. Beispielsweise könnten die Brechkraftabstände benachbarter Linien in Fig. 2 jeweils eine Differenz von 0,5 dpt bezeichnen. Wie daraus zu erkennen ist, liegt der gesamte Kanalbereich in einem Bereich mit im Wesentlichen konstanter Brechkraft, was gerade einem Einstärkenglas entspricht. Die Brechkraft des Brillenglases 10 im Kanalbereich muss dabei nicht 0 sein. Sie kann sowohl positiv als auch negativ sein. In der Praxis wird die Erfindung besonders relevant im Zusammenhang mit einer negativen Brechkraft des Brillenglases 10 im Kanalbereich sein, da gerade bei bereits vorhandener Myopie eine weitere Myopieprogression häufiger anzutreffen ist und sich hier die erfindungsgemäßen Brillengläser besonders eignen.

Unabhängig vom absoluten Wert der Brechkraft weist das Brillenglas 10 in der Darstellung von Fig. 2 im Kanalbereich 12 jedenfalls die niedrigste Brechkraft auf. Zu den seitlichen Wirkungsabschnitten 18n, 18t hin nimmt die Brechkraft des Brillenglases 10 dann stetig zu und erreicht in der schematischen Darstellung auf etwa mittlerer Höhe im Bereich der seitlichen Ränder des Brillenglases 10 sein jeweiliges Maximum.

Der Verlauf und die Ausdehnung des Kanalbereichs 12 lassen sich für bevorzugte Ausführungsformen über Grenzwerte der Brechkraft des Brillenglases 10 definieren. Während in der Allgemeinheit, welche insbesondere bei Anwendung der vorliegenden Erfindung für Gleitsichtgläser besonders vorteilhaft ist, ein oben beschriebener Vergleich der Brechkraft entlang von horizontalen Schnitten erfolgen kann, ist es insbesondere bei Anwendung der Erfindung auf Einstärkengläser auch möglich, für eine Charakterisierung des Kanalbereichs 12 bevorzugter Ausführungsformen eine globale Brechkraftgrenze auf Basis des Kanaltoleranzwerts zur Definition des Verlaufs der Kanalgrenzlinien anzuwenden. So könnten in einer Charakterisierung bevorzugter Ausführungsformen der Erfindung, insbesondere für die Nutzung in Einstärkengläsern, die Kanalgrenzlinien dadurch festgelegt werden, dass die Brechkraft des Brillenglases ausgehend von einer Position innerhalb des Kanalbereichs 12 hin den seitlichen Wirkungsabschnitten dort erstmals um den (insbesondere für den Kanalbereich charakteristischen) Kanaltoleranzwert höher liegt als eine minimale Brechkraft innerhalb des (gesamten) Kanalbereichs 12. Ansonsten kann für den Kanaltoleranzwert das bereits eingangs beschriebene gelten. Bezogen auf die schematische Darstellung in Fig. 2 könnten somit beispielsweise die beiden Isolinien für die kleinste markierte Brechkraft als Kanalgrenzlinien 26n, 26t genutzt werden.

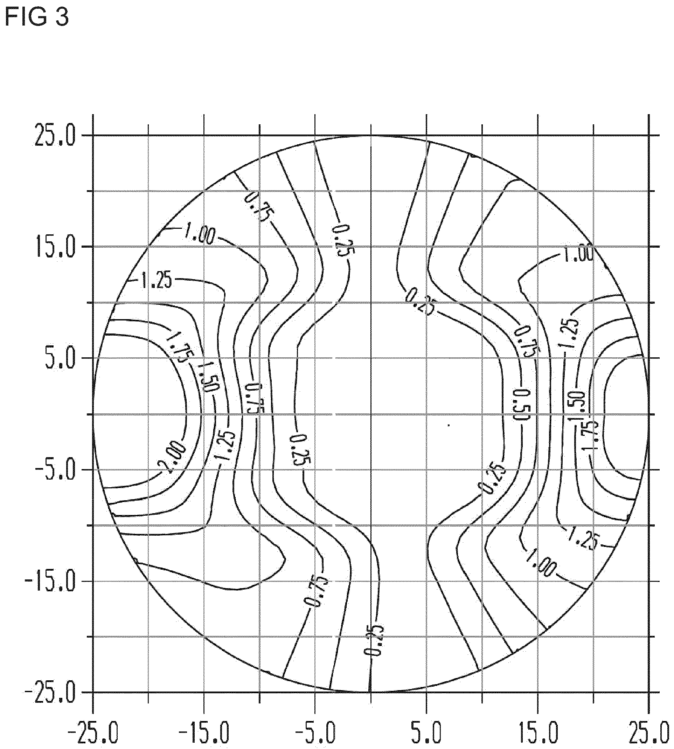

Fig. 3 schließlich zeigt eine beispielhafte konkrete Brechkraftverteilung in einem Brillenglas gemäß einer bevorzugten Ausführungsform. An der horizontalen und vertikalen Achse ist eine beispielhafte Bemaßung in mm angegeben, während die Isolinien jeweils Positionen gleicher Brechkraft miteinander Verbindung. Die Differenz der Brechkraftwerte benachbarter Isolinien ist, wie der Beschriftung zu entnehmen ist, in diesem Fall 0,25 dpt. Auch hierbei handelt es sich um ein Einstärkenglas.

### Bezugszeichenliste

- 10: Brillenglas
- 12: Kanalbereich
- 14: oberer Rand
- 16: unterer Rand
- 18n: nasaler Wirkungsabschnitt
- 18t: temporaler Wirkungsabschnitt
- 20: zentraler Hauptdurchblicksbereich
- 22: Nahsichtzone
- 24: oberer Kanalabschnitt
- 26n: nasale Kanalgrenzlinie
- 26t: temporale Kanalgrenzlinie

## Patentansprüche

1. Ein gerandetes bzw. eingeschliffenes Brillenglas (10), welches umfasst:
- einen durchgängigen Kanalbereich (12), welcher sich von einem oberen Rand (14) zu einem unteren Rand (16) des Brillenglases durchgängig erstreckt; und
- einen horizontal beidseitig an den durchgängigen Kanalbereich (12) angrenzenden und sich jeweils vom oberen (14) zum unteren Rand (16) des Brillenglases (10) durchgängig erstreckenden Wirkungsbereich (18n, 18t),
wobei die Brechkraft des Brillenglases (10) vom Kanalbereich (12) zum Wirkungsbereich (18n, 18t) hin beidseits des Kanalbereichs (12) ansteigt,
wobei eine horizontale Breite des Kanalbereichs am oberen Rand und am unteren Rand des Brillenglases kleiner ist als eine maximale horizontale Breite des Kanalbereichs,
wobei der Kanalbereich (12) innerhalb des Brillenglases (10) beidseitig jeweils durch eine Kanalgrenzlinie begrenzt wird, welche für jeden horizontalen Schnitt durch das Brillenglas dadurch festgelegt wird, dass die Brechkraft des Brillenglases ausgehend von einer Position einer minimalen Brechkraft innerhalb des Kanalbereichs entlang des jeweiligen Schnitts dort erstmals um einen Kanaltoleranzwert höher liegt als die jeweilige minimale Brechkraft, und
wobei der Kanaltoleranzwert im Bereich von etwa 0,25 dpt bis etwa 0,5 dpt liegt.

2. Brillenglas (10) nach Anspruch 1, wobei der Kanalbereich in einem vertikal mittleren Bereich des Brillenglases eine maximale horizontale Breite aufweist, die größer ist als eine minimale horizontale Breite des Kanalbereichs oberhalb und/oder größer ist als eine minimale horizontale Breite des Kanalbereichs unterhalb.

3. Brillenglas (10) nach Anspruch 1 oder 2,
wobei der Wirkungsbereich einen nasalen Wirkungsabschnitt (18n) und einen temporalen Wirkungsabschnitt (18t) umfasst, von denen jeder zusammenhängend ausgebildet ist, und welche voneinander durch den Kanalbereich (12) getrennt sind.

4. Brillenglas (10) nach Anspruch 3, wobei die maximale Brechkraft im nasalen (18n) und im temporalen Wirkungsabschnitt (18t) um nicht mehr als etwa 3 dpt, vorzugsweise nicht mehr als etwa 2 dpt, noch mehr bevorzugt nicht mehr als etwa 1 dpt, am meisten bevorzugt nicht mehr als etwa 0,5 dpt voneinander abweicht, und/oder
wobei die maximale Brechkraft sowohl im nasalen (18n) als auch im temporalen Wirkungsbereich (18t) um zumindest etwa 1 dpt, vorzugsweise zumindest etwa 1,5 dpt, weiter bevorzugt zumindest etwa 2 dpt, noch mehr bevorzugt zumindest etwa 2,5 dpt, am meisten bevorzugt zumindest etwa 3 dpt größer ist als die minimale Brechkraft im Kanalbereich (12).

5. Brillenglas (10) nach Anspruch 3 oder 4, wobei für zumindest 50%, vorzugsweise zumindest 60%, noch mehr bevorzugt zumindest 70%, am meisten bevorzugt zumindest 80% der Höhe des Brillenglases (10), in jedem horizontalen Schnitt eine maximale Brechkraft im nasalen und/oder im temporalen Wirkungsabschnitt um zumindest einen
Minimalwirkungswert größer ist als die minimale Brechwert innerhalb des Kanalbereichs entlang des jeweiligen Schnitts, wobei vorzugsweise der Minimalwirkungswert um etwa 0,25 dpt, vorzugsweise um etwa 0,5 dpt, noch mehr bevorzugt um etwa 1 dpt, am meisten bevorzugt um etwa 1,5 dpt größer ist als der minimale Brechwert innerhalb des Kanalbereichs.

6. Brillenglas nach einem der vorangegangenen Ansprüche, wobei der Kanaltoleranzwert bei 0,25 dpt, oder bei etwa 0,3 dpt oder bei etwa 0,35 dpt, oder bei etwa 0,4 dpt oder bei etwa 0,45 dpt oder bei etwa 0,5 dpt liegt

7. Brillenglas nach einem der vorangegangenen Ansprüche, wobei der Minimalwirkungswert um etwa 0,25 dpt, vorzugsweise um etwa 0,5 dpt, noch mehr bevorzugt um etwa 1 dpt, am meisten bevorzugt um etwa 1,5 dpt größer ist als der Kanaltoleranzwert.

8. Brillenglas (10) nach einem der vorangegangenen Ansprüche, wobei der Kanalbereich (12) umfasst:
- einen zentralen Hauptdurchblicksbereich (20);
- eine unterhalb des zentralen Hauptdurchblicksbereichs (20) angeordnete und sich vom zentralen Hauptdurchblicksbereich (20) zum unteren Rand (16) des Brillenglases (10) erstreckende Nahsichtzone (22); und
- einen oberhalb des zentralen Hauptdurchblicksbereichs (20) angeordneten und sich vom zentralen Hauptdurchblicksbereich (20) zum oberen Rand (14) des Brillenglases (10) erstreckenden oberen Kanalabschnitt (24).

9. Brillenglas (10) nach Anspruch 8, welches im zentralen Hauptdurchblicksbereich (20) und im oberen Kanalabschnitt (24) eine im Wesentlichen konstante Brechkraft aufweist.

10. Brillenglas (10) nach Anspruch 8 oder 9, welches im zentralen Hauptdurchblicksbereich (20) und in der Nahsichtzone (22) eine im Wesentlichen konstante Brechkraft aufweist.

11. Brillenglas (10) nach Anspruch 8 oder 9, welches in der Nahsichtzone (22) eine höhere mittlere Brechkraft aufweist als im zentralen Hauptdurchblicksbereich (20).

12. Brillenglas (10) nach einem der Ansprüche 8 bis 11, wobei sich die Nahsichtzone vom zentralen Hauptdurchblicksbereich zum unteren Rand des Brillenglases entlang einer Linie, insbesondere einer Geraden, erstreckt, welche sich von einem Zentrum (insbesondere einem Flächenschwerpunkt) des zentralen Hauptdurchblicksbereichs nasal abwärts unter einem Winkel im Bereich von etwa 0° bis etwa 30°, vorzugsweise in einem Bereich von etwa 5° bis etwa 20°, noch mehr bevorzugt in einem Bereich von etwa 8° bis etwa 15° relativ zur Vertikalen erstreckt.

13. Brillenglas nach einem der Ansprüche 8 bis 12,
wobei eine horizontale Breite des oberen Kanalabschnitts in einem Bereich von zumindest etwa 3 mm, vorzugsweise zumindest etwa 5 mm, noch mehr bevorzugt zumindest etwa 10 mm liegt, und/oder
wobei eine horizontale Breite des oberen Kanalabschnitts, oder zumindest eine minimale horizontale Breite des oberen Kanalabschnitts in einem Bereich von nicht mehr als etwa 30 mm, vorzugsweise nicht mehr als etwa 20 mm, noch mehr bevorzugt nicht mehr als etwa 10 mm liegt.

14. Brillenglas nach einem der Ansprüche 8 bis 13,
wobei eine horizontale Breite der Nahsichtzone in einem Bereich von zumindest etwa 3 mm, vorzugsweise zumindest etwa 5 mm, noch mehr bevorzugt zumindest etwa 10 mm liegt, und/oder
wobei eine horizontale Breite der Nahsichtzone, oder zumindest eine minimale horizontale Breite der Nahsichtzone in einem Bereich von nicht mehr als etwa 30 mm, vorzugsweise nicht mehr als etwa 20 mm, noch mehr bevorzugt nicht mehr als etwa 10 mm liegt.

15. Brillenglas nach einem der Ansprüche 8 bis 14,
wobei eine horizontale Breite des zentralen Hauptdurchblicksbereichs in einem Bereich von zumindest etwa 5 mm, vorzugsweise zumindest etwa 10 mm, noch mehr bevorzugt zumindest etwa 15 mm, am meisten bevorzugt zumindest etwa 20 mm liegt, und/oder
wobei eine horizontale Breite des zentralen Hauptdurchblicksbereichs in einem Bereich von nicht mehr als etwa 35 mm, vorzugsweise nicht mehr als etwa 30 mm, weiter bevorzugt nicht mehr als etwa 25 mm, am meisten bevorzugt nicht mehr als etwa 20 mm liegt.

## Claims

1. A rimmed or ground eyeglass lens (10) comprising:
- a continuous channel area (12) extending continuously from an upper edge (14) to a lower edge (16) of the eyeglass lens; and
- an effective area (18n, 18t) adjacent to the continuous channel area (12) on both sides horizontally and extending continuously from the upper edge (14) to the lower edge (16) of the eyeglass lens (10),
wherein the refractive power of the eyeglass lens (10) increases from the channel area (12) toward the effective area (18n, 18t) on both sides of the channel area (12),
wherein a horizontal width of the channel area at the upper edge and at the lower edge of the eyeglass lens is smaller than a maximum horizontal width of the channel area,
wherein the channel area (12) is bounded on both sides within the eyeglass lens (10) by a channel boundary line, which is defined for each horizontal section through the eyeglass lens by the fact that the refractive power of the eyeglass lens, starting from a position of minimum refractive power within the channel area along the respective section, is higher there for the first time by a channel tolerance value than the respective minimum refractive power, and
wherein the channel tolerance value is in the range of about 0.25 dpt to about 0.5 dpt.

2. Lens (10) according to claim 1, wherein the channel area has a maximum horizontal width in a vertically central area of the lens that is greater than a minimum horizontal width of the channel area above and/or greater than a minimum horizontal width of the channel area below.

3. Lens (10) according to claim 1 or 2,
wherein the effective area comprises a nasal effective section (18n) and a temporal effective section (18t), each of which is formed contiguously and which are separated from each other by the channel area (12).

4. Lens (10) according to claim 3, wherein the maximum refractive power in the nasal (18n) and temporal effective section (18t) differs by no more than about 3 dpt, preferably no more than about 2 dpt, more preferably no more than about 1 dpt, most preferably no more than about 0.5 dpt, and/or
wherein the maximum refractive power in both the nasal (18n) and temporal effective section (18t) is at least about 1 dpt, preferably at least about 1.5 dpt, more preferably at least about 2 dpt, even more preferably at least about 2.5 dpt, most preferably at least about 3 dpt greater than the minimum refractive power in the channel section (12).

5. Lens (10) according to claim 3 or 4, wherein for at least 50%, preferably at least 60%, even more preferably at least 70%, most preferably at least 80% of the height of the lens (10), in each horizontal section, a maximum refractive power in the nasal and/or temporal effective section is at least one
minimum effective value greater than the minimum refractive power within the channel area along the respective section, wherein preferably the minimum effective value is about 0.25 dpt, preferably about 0.5 dpt, more preferably about 1 dpt, most preferably about 1.5 dpt greater than the minimum refractive power within the channel area.

6. Lens according to one of the preceding claims, wherein the channel tolerance value is 0.25 dpt, or approximately 0.3 dpt, or approximately 0.35 dpt, or approximately 0.4 dpt, or approximately 0.45 dpt, or approximately 0.5 dpt.

7. Lens according to one of the preceding claims, wherein the minimum effective value is greater than the channel tolerance value by about 0.25 dpt, preferably by about 0.5 dpt, more preferably by about 1 dpt, most preferably by about 1.5 dpt.

8. Lens (10) according to one of the preceding claims, wherein the channel area (12) comprises:
- a central main viewing area (20);
- a near vision zone (22) arranged below the central main viewing area (20) and extending from the central main viewing area (20) to the lower edge (16) of the eyeglass lens (10); and
- an upper channel section (24) arranged above the central main viewing area (20) and extending from the central main viewing area (20) to the upper edge (14) of the eyeglass lens (10).

9. Lens (10) according to claim 8, which has a substantially constant refractive power in the central main viewing area (20) and in the upper channel section (24).

10. Lens (10) according to claim 8 or 9, which has a substantially constant refractive power in the central main viewing area (20) and in the near vision zone (22).

11. Lens (10) according to claim 8 or 9, which has a higher average refractive power in the near vision zone (22) than in the central main viewing area (20).

12. Lens (10) according to any one of claims 8 to 11, wherein the near vision zone extends from the central main viewing area to the lower edge of the lens along a line, in particular a straight line, which extends from a center (in particular a center of gravity) of the central main viewing area nasally downward at an angle in the range from about 0° to about 30°, preferably in a range from about 5° to about 20°, more preferably in a range from about 8° to about 15° relative to the vertical.

13. Lens according to any of claims 8 to 12,
wherein a horizontal width of the upper channel section is in a range of at least about 3 mm, preferably at least about 5 mm, more preferably at least about 10 mm, and/or
wherein a horizontal width of the upper channel section, or at lea ely a minimum horizontal width of the upper channel section, is in a range of not more than about 30 mm, preferably not more than about 20 mm, and more preferably not more than about 10 mm.

14. Lens according to any of claims 8 to 13,
wherein a horizontal width of the near vision zone is in a range of at least about 3 mm, preferably at least about 5 mm, more preferably at least about 10 mm, and/or
wherein a horizontal width of the near vision zone, or at least a minimum horizontal width of the near vision zone, is in a range of not more than about 30 mm, preferably not more than about 20 mm, more preferably not more than about 10 mm.

15. Lens according to any of claims 8 to 14,
wherein a horizontal width of the central main viewing area is in a range of at least about 5 mm, preferably at least about 10 mm, more preferably at least about 15 mm, most preferably at least about 20 mm, and/or
wherein a horizontal width of the central main viewing area is in a range of not more than about 35 mm, preferably not more than about 30 mm, more preferably not more than about 25 mm, most preferably not more than about 20 mm.

## Revendications

1. Verre de lunettes cerclé ou taillé (10) comprenant :
- une zone de canal continue (12) qui s'étend de manière continue d'un bord supérieur (14) à un bord inférieur (16) du verre de lunettes ; et
- une zone d'action (18n, 18t) adjacente horizontalement des deux côtés à la zone de canal continue (12) et s'étendant respectivement de manière continue du bord supérieur (14) au bord inférieur (16) du verre de lunettes (10),
la puissance de réfraction du verre de lunettes (10) augmentant de la zone de canal (12) vers la zone d'action (18n, 18t) des deux côtés de la zone de canal (12),
une largeur horizontale de la zone de canal au bord supérieur et au bord inférieur du verre de lunettes étant inférieure à une largeur horizontale maximale de la zone de canal,
la zone de canal (12) étant délimitée à l'intérieur du verre de lunettes (10) des deux côtés respectivement par une ligne limite de canal qui est déterminée pour chaque coupe horizontale à travers le verre de lunettes par le fait que la puissance de réfraction du verre de lunettes, en partant d'une position d'une puissance de réfraction minimale à l'intérieur de la zone de canal le long de la coupe respective, y est pour la première fois supérieure d'une valeur de tolérance de canal à la puissance de réfraction minimale respective, et
la valeur de tolérance de canal se situant dans la plage d'environ 0,25 dpt à environ 0,5 dpt.

2. Verre de lunettes (10) selon la revendication 1, dans lequel la zone de canal dans une zone centrale verticale du verre de lunettes présente une largeur horizontale maximale qui est supérieure à une largeur horizontale minimale de la zone de canal au-dessus et/ou qui est supérieure à une largeur horizontale minimale de la zone de canal en dessous.

3. Verre de lunettes (10) selon la revendication 1 ou 2,
dans lequel la zone d'action comprend une section d'action nasale (18n) et une section d'action temporelle (18t), dont chacune est formée de manière continue, et qui sont séparées l'une de l'autre par la zone de canal (12).

4. Verre de lunettes (10) selon la revendication 3, dans lequel la puissance de réfraction maximale dans la section d'action nasale (18n) et dans la section d'action temporelle (18t) ne diffère pas de plus d'environ 3 dpt, de préférence pas de plus d'environ 2 dpt, de manière encore plus préférée pas de plus d'environ 1 dpt, de manière la plus préférée pas de plus d'environ 0,5 dpt, et/ou
la puissance de réfraction maximale aussi bien dans la zone d'action nasale (18n) que dans la zone d'action temporale (18t) étant supérieure d'au moins environ 1 dpt, de préférence d'au moins environ 1,5 dpt, de préférence encore d'au moins environ 2 dpt, de préférence encore d'au moins environ 2,5 dpt, de préférence encore d'au moins environ 3 dpt à la puissance de réfraction minimale dans la zone de canal (12).

5. Verre de lunettes (10) selon la revendication 3 ou 4, dans lequel, pour au moins 50%, de préférence au moins 60%, plus préférablement au moins 70%, plus préférablement au moins 80% de la hauteur du verre de lunettes (10), dans chaque coupe horizontale, une puissance de réfraction maximale dans la section d'action nasale et/ou dans la section d'action temporale est supérieure d'au moins une valeur.
valeur d'action minimale est supérieure à l'indice de réfraction minimal à l'intérieur de la zone de canal le long de la coupe respective, de préférence la valeur d'action minimale étant supérieure à l'indice de réfraction minimal à l'intérieur de la zone de canal d'environ 0,25 dpt, de préférence d'environ 0,5 dpt, encore plus préférablement d'environ 1 dpt, le plus préférablement d'environ 1,5 dpt.

6. Verre de lunettes selon l'une quelconque des revendications précédentes, dans lequel la valeur de tolérance du canal est de 0,25 dpt, ou d'environ 0,3 dpt, ou d'environ 0,35 dpt, ou d'environ 0,4 dpt, ou d'environ 0,45 dpt, ou d'environ 0,5 dpt.

7. Verre de lunettes selon l'une quelconque des revendications précédentes, dans lequel la valeur d'efficacité minimale est supérieure à la valeur de tolérance de canal d'environ 0,25 dpt, de préférence d'environ 0,5 dpt, de manière encore plus préférée d'environ 1 dpt, de manière la plus préférée d'environ 1,5 dpt.

8. Verre de lunettes (10) selon l'une quelconque des revendications précédentes, dans lequel la zone de canal (12) comprend :
- une zone de vision principale centrale (20) ;
- une zone de vision de près (22) située en dessous de la zone de vision principale centrale (20) et s'étendant depuis la zone de vision principale centrale (20) jusqu'au bord inférieur (16) du verre de lunettes (10) ; et
- une section de canal supérieur (24) située au-dessus de la zone de vision principale centrale (20) et s'étendant de la zone de vision principale centrale (20) au bord supérieur (14) du verre de lunettes (10).

9. Verre de lunettes (10) selon la revendication 8, qui présente une puissance de réfraction sensiblement constante dans la zone de vision principale centrale (20) et dans la section de canal supérieure (24).

10. Verre de lunettes (10) selon la revendication 8 ou 9, qui présente une puissance de réfraction sensiblement constante dans la zone de vision principale centrale (20) et dans la zone de vision de près (22).

11. Verre de lunettes (10) selon la revendication 8 ou 9, qui présente dans la zone de vision de près (22) une puissance de réfraction moyenne plus élevée que dans la zone de vision principale centrale (20).

12. Verre de lunettes (10) selon l'une quelconque des revendications 8 à 11, dans lequel la zone de vision de près s'étend depuis la zone de vision principale centrale jusqu'au bord inférieur du verre de lunettes le long d'une ligne, en particulier une ligne droite, qui s'étend depuis un centre (en particulier un centre de gravité de surface) de la zone de vision principale centrale vers le bas en direction du nez selon un angle dans la plage d'environ 0° à environ 30°, de préférence dans une plage d'environ 5° à environ 20°, de manière encore plus préférée dans une plage d'environ 8° à environ 15° par rapport à la verticale.

13. Verre de lunettes selon l'une quelconque des revendications 8 à 12,
dans lequel une largeur horizontale de la partie de canal supérieure est dans une plage d'au moins environ 3 mm, de préférence d'au moins environ 5 mm, de manière encore plus préférée d'au moins environ 10 mm, et/ou
dans lequel une largeur horizontale de la partie de canal supérieure, ou au moins une largeur horizontale minimale de la partie de canal supérieure, est dans une plage ne dépassant pas environ 30 mm, de préférence ne dépassant pas environ 20 mm, de manière encore plus préférée ne dépassant pas environ 10 mm.

14. Verre de lunettes selon l'une quelconque des revendications 8 à 13,
dans lequel une largeur horizontale de la zone de vision de près est comprise dans une plage d'au moins environ 3 mm, de préférence d'au moins environ 5 mm, de manière encore plus préférée d'au moins environ 10 mm, et/ou
dans lequel une largeur horizontale de la zone de vision de près, ou au moins une largeur horizontale minimale de la zone de vision de près, est comprise dans une plage ne dépassant pas environ 30 mm, de préférence ne dépassant pas environ 20 mm, de manière encore plus préférée ne dépassant pas environ 10 mm.

15. Verre de lunettes selon l'une quelconque des revendications 8 à 14,
dans lequel une largeur horizontale de la zone de vision principale centrale est comprise dans une plage d'au moins environ 5 mm, de préférence d'au moins environ 10 mm, plus préférablement d'au moins environ 15 mm, plus préférablement d'au moins environ 20 mm, et/ou
dans lequel une largeur horizontale de la zone de transparence principale centrale se situe dans une plage ne dépassant pas environ 35 mm, de préférence ne dépassant pas environ 30 mm, de préférence encore ne dépassant pas environ 25 mm, de préférence encore ne dépassant pas environ 20 mm.
